**Europäisches Patentamt**

**European Patent Office**

**Office européen des brevets**

(19)

(11) Veröffentlichungsnummer: **0 409 847 B1**

(12) ## EUROPÄISCHE PATENTSCHRIFT

(45) Veröffentlichungstag der Patentschrift: **01.06.94**

(51) Int. Cl.5: **H02J 7/10**

(21) Anmeldenummer: **89903024.1**

(22) Anmeldetag: **10.03.89**

(86) Internationale Anmeldenummer:
**PCT/AT89/00027**

(87) Internationale Veröffentlichungsnummer:
**WO 89/08940 (21.09.89 89/23)**

(54) **VERFAHREN UND SCHALTUNGSVARIANTEN ZUM LADEN VON AKKUMULATOREN.**

(30) Priorität: **11.03.88 AT 654/88**

(43) Veröffentlichungstag der Anmeldung:
**30.01.91 Patentblatt 91/05**

(45) Bekanntmachung des Hinweises auf die
Patenterteilung:
**01.06.94 Patentblatt 94/22**

(84) Benannte Vertragsstaaten:
**AT BE CH DE FR GB IT LI LU NL SE**

(56) Entgegenhaltungen:
**EP-A- 0 181 112        DE-A- 3 408 657**
**FR-A- 2 137 038        FR-A- 2 203 198**
**FR-A- 2 524 646        US-A- 3 889 172**
**US-A- 4 371 826        US-A- 4 628 242**
**US-A- 4 628 243        US-A- 4 692 680**
**US-A- 4 710 694**

(73) Patentinhaber: **WIESSPEINER, Gerhard**
**Rudolfstrasse 14**
**A-8010 Graz(AT)**

(72) Erfinder: **WIESSPEINER, Gerhard**
**Rudolfstrasse 14**
**A-8010 Graz(AT)**

# Beschreibung

## EINLEITUNG:

Die Problematik des Ladens von Akkumulatoren, insbesondere von gasdichten Ni-Cd-Accus ist dem Fachmann, wie den betroffenen Anwendern bekannt. Nach wie vor besteht ein großer Bedarf an einfachen und zuverlässig arbeitenden Accudeschaltungen vor allem für die Schnell-Ladung. Der Patentantrag beschreibt daher Verfahren und Schaltungsanordnungen für das Laden von Akkumulatoren zum Schutz vor Überladung und zur Verhinderung von Fehlfunktionen, verursacht durch Effekte, die vom Ladezustand unabhängig sind, sowie Schaltungsvarianten zur technischen Realisierung.

## STAND DER TECHNIK:

Die Schwierigkeiten zur Erkennung des optimalen Abschaltzeitpunktes zur Erreichung der vollständigen Aufladung sowie zum Schutz vor Überladung ist in der Literatur charakterisiert. Aus der gleichen Literatur sind dazu auch die Lademethoden und Schaltungen ersichtlich (z.B. Retzbach: Akkus und Ladegeräte, ISBN 3-7883-0142-2). Neuere Erfindungen auf diesem Gebiet (z.B. DE 3705222A1, DE 3440430A1, ...) betreffen Ausführungsvarianten oder Schaltungsdetails dieser Prinzipien, wobei für nahezu alle Schaltungen kennzeichnend ist, daß die Abschaltkriterien von fest vordefinierten Werten z.B. Ladeschlußspannung, Zellentemperatur bzw. -gradient, Ladungsmenge, u.dgl. abgeleitet werden.

Weiters ist bekannt, daß nicht ein bestimmter Wert, sondern der zeitliche Verlauf eines Ladeparameters (Spannung, Strom, Innenwiderstand), erfaßt und ausgewertet werden kann. So zeigt beispielsweise bei Konstantstromladung der Spannungsverlauf einer leeren Zelle vorerst eine Abnahme, bis zum Erreichen der vollständigen Aufladung eine Zunahme und danach wieder eine Abnahme. Es entsteht ein charakteristisches Maximum. Der nachfolgende Spannungsrückgang wird durch Übertemperatur und Druck verursacht und tritt bei offenen Zellen kaum in Erscheinung. Die (stromabhängige) Spannung hat aber einen maximalen Endwert erreicht, der auch durch langanhaltende Energiezufuhr nicht mehr ansteigt (Maximum). Gleichwertige Aussagen bezüglich des Auftretens eines Extremwertes bei Voll-Ladung gelten auch für den Verlauf des Innenwiderstandes der Zelle(n) und des Ladestromes (Minimum) bei Konstantspannung.

Diese Tatsachen waren wohl hinlänglich bekannt, es wurde ihnen aber bisher nicht die richtige Bedeutung beigemessen.

So werden beispielsweise Schaltungsvarianten vorgestellt, welche den Ladevorgang abbrechen, wenn bei Konstantstromladung, die Akkuspannung sinkt (-dV Methode).

Bei Konstantspannungsladung wird in Analogie dazu der Ladevorgang beendet, wenn der Strom nach dem Durchlaufen eines Minimums wieder ansteigt (FR-A-1489957), bzw. auf einen bestimmten Wert angestiegen ist (US-A-3889172). Zur Vermeidung einer Überladung wird in EP-0181112 bei Konstantstromladung die Abschaltung im Wendepunkt des Spannungsanstieges vor Erreichen des Maximums vorgeschlagen.

In US-4710694 wird ein Ladegerät für Bleiakkus beschrieben, welches bei einem definierten Spannungsanstieg die Konstantstromladung beendet und zur vollständigen Aufladung noch eine zeitbegrenzte Ladestufe verwendet.

FR-A-2203198 beschreibt ein Ladeverfahren für Bleikkus, welches in Intervallen den Ladevorgang zur Messung der Klemmspannung unterbricht und dann beendet, wenn der aktuelle Meßwert kleiner oder gleich dem vorhergehenden ist. Durch die Unterbrechung des Ladevorganges wird die Ladezeit deutlich verlängert.

## NEUHEIT:

Die neue Erfindung grenzt sich von bekannten Verfahren dadurch ab, daß nicht eine einfache Meßgröße (z.Bsp. Klemmspannung) zur Bestimmung des Ladezustandes verwendet wird, sondern, daß unter Berücksichtigung des Akkuersatzschaltbildes aus dem zeitlichen Verlauf von Akkuspannung und Ladestrom eine, der inneren Akkuspannung bzw. dem inneren Widerstand zugeordnete Kenngröße ermittelt und ausgewertet wird.

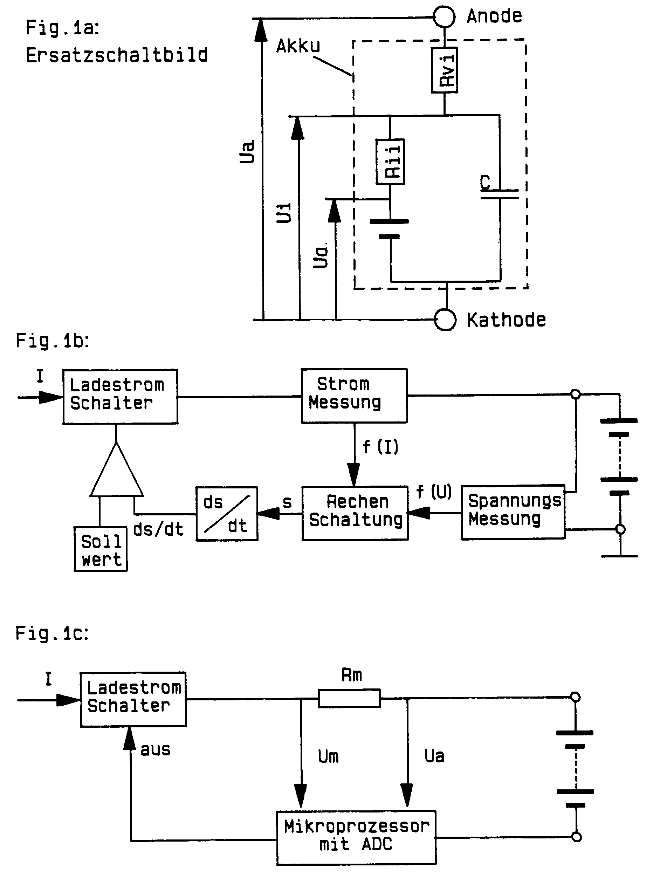

Fig.1a) zeigt das vereinfachte Ersatzschaltbild des Akkus.

Der Innenwiderstand $(Rvi + Rii)$, in Serie zur Zellspannung UO, setzt sich zusammen aus der Serienschaltung eines Anteils Rv, der den ungeladenen Akku charakterisiert, und dem inneren Widerstand (Rii), der den vollgeladenen Akku kennzeichnet. Durch den Kondensator (C), der im Mittelpunkt der Teilwiderstände angreift und parallel zu Rii und zur Zellspannung UO liegt, können die Komponenten des Ersatzschaltbildes und deren Verhalten durch Strom-Spannungsänderungen bzw. aus ihrem Wechselstromverhalten ermittelt werden.

Damit läßt sich auch die innere Akkuspannung (Ui) berechnen, die die Ladung genauer beschreibt als die Klemmspannung (Ua). Die erforderliche Strom-Spannungsänderung ist zumindest immer im Einschaltzeitpunkt gegeben.

Bei Ladebeginn kann der hohe Innenwiderstand Rvi wegen der fallenden Kennlinie der mittleren Akkuspannung Ug zu möglichen Fehlfunktionen für die Erkennung des Abschaltzeitpunktes führen. Dies wird durch die Berechnung einer dem Innenwiderstand Rii oder der inneren Akkuspannung Ui entsprechenden Größe verhindert.

Mit zunehmender Ladung nimmt Rii und Uo zu und erreicht bei vollem Akku ein Maximum. Dieses Maximum kennzeichnet die vollgeladene Zelle und ist damit ein ideales Kriterium zur Steuerung von Batterieladegeräten, weil dieses Kriterium von der Zelltype, Exemplarstreung, Zellenanzahl, Temperatur, parasitären Spannungsabfällen und Umgebungseinflüssen, weitestgehend unabhängig ist.

Das Verhalten von Rii wirkt sich auf die Meßgrößen Ua und I aus, aus denen eine Kenngröße (S) ableiten läßt, die ebenfalls im Volladezustand einen Extremwert aufweist.

Um vollständige Aufladung zu erreichen und zum Schutz vor Überladung wird daher vorgeschlagen, die Energiezufuhr abzuschalten, oder auf ein unschädliches Mindestmaß zu verringern, wenn eine aus dem Akkuersatzschaltbild berechnete und Rii oder Ui verwandte Kenngröße (S) einen Extremwert erreicht. Dabei geht der Gradient dS/dt gegen Null .

## FORTSCHRITT:

Neben den bereits erwähnten Vorteilen der Vermeidung von unvollständiger Ladung bzw. Überladung werden für die Erkennung des Extremums keine zusätzlichen Sensoren und zum Anschluß des Akkus nur eine Zweidrahtleitung benötigt. Außerdem kann für verschiedene Akkus die gleiche Schaltungsanordnung verwendet werden und bedarf keines Abgleiches in der Produktion.

## TECHNISCHE REALISIERUNG:

Methoden, Schaltungen und Programmiertechniken zur Berechnung einer Kenngröße aus mehreren Meßwerten, sowie zur Erkennung von Extremwerten (Minimum/Maximum) sind aus der Literatur bekannt (Analog, Digital, Computer). Da es sich um langsame Vorgänge mit geringen Änderungen handelt, ist die Anwendung eines Mikroprozessors mit Analoginterface vorteilhaft. Prinzipiell kommen jedoch alle Schaltungen in Frage, die eine Meßwertverarbeitung in Kombination mit einer Extremwerterkennung mit Vergleichs- und Schaltoperation ausführen.
Diese Schaltungen können aus diskreten Bauelementen, als Hybrid oder als monolitischer IC aufgebaut sein oder in ihrer Funktion durch das Programm eines Rechenwerkes (Prozessrechner, Mikroprozessor) realisiert werden.

Wohl ist die grundsätzliche Arbeitsweise und Funktion der oben angeführten Schaltungen und Baugruppen der Elektronik bzw. die erforderliche Programmiertechnik dem Fachmann durchaus geläufig, die Anwendung derselben zur beschriebenen Steuerung von Akkuladegeräten ist jedoch neu und war nicht naheliegend.

## NÄHERE BESCHREIBUNG DER ERFINDUNGEN:

Fig.1b) zeigt eine der möglichen Realisierungsvarianten für das Ladeverfahren.
Strom und Spannungsmesser führen einer Rechenschaltung meßgrößenabhängige Signale zu. In der Rechenschaltung werden diese verknüpft und eine Hilfsgröße (S) gebildet, die dem inneren Widerstand Rii oder Ui verwandt ist.
Aus diesem zeitlich veränderlichen Momentanwert (S) kann die Änderungsgeschwindigkeit (dS/dt) zum Beispiel in einem Differenzierglied oder durch Speicherung und Differenzbildung ermittelt und einer Vergleichsoperation zugeführt werden. Wenn dS/dt gegen Null geht, d.h. in der Praxis kleiner als ein Mindestwert wird, dann wird z.B. mit einem Schalter der Ladestrom unterbrochen oder auf ein unschädliches Mindestmaß reduziert.

Fig 1c) zeigt eine andere mögliche Ausführungsform in Mikroprozessor- (MC) oder Digitaltechnik . Die Akkuspannung (Ua) und der Ladestrom, welcher in diesem Beispiel als Spannungsabfall (Um-Ua) an einem Strommeßwiderstand (Rm) auftritt, werden abgetastet, digitalisiert und daraus die Hilfsgröße S berechnet. S wird als S1 gespeichert und nach einer Verzögerungszeit wird auf die gleiche Art die Größe S2 berechnet. Wenn die Änderungsgeschwindigkeit, gekennzeichnet durch die Differenz von (S2-S1) unter einem, im Bereich des Extremums von S auftretendem, Vergleichswert liegt, wird der Ladestrom abgeschaltet.
Ladung mit pulsierendem Strom:
Die Ladung von Akkus wird der Einfachheit halber zwar sehr häufig mit pulsierenden Strom, wie er beispielsweise aus der Gleichrichtung der Netzwechselspannung entsteht, durchgeführt. Durch Verwendung eines Gleichstromes mit überlagertem Wechselstrom (pulsierender Strom) ergeben sich Vorteile, die bisher nicht genützt wurden.

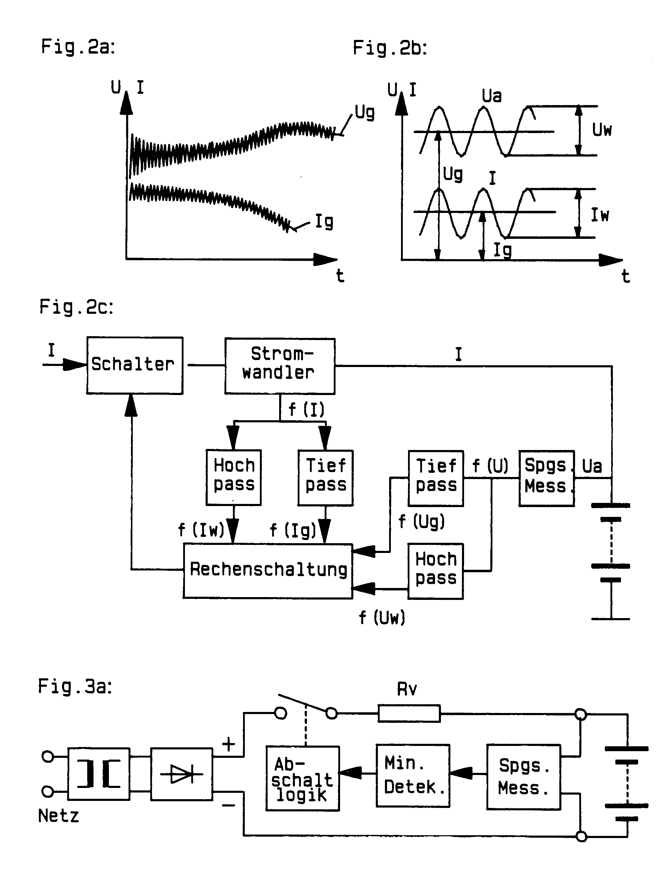

Fig.2a,b zeigt einen Verlauf der Akkuspannung (Ua) und des Ladestroms I mit den pulsierenden Wechselanteilen (Uw,Iw) und den langsamen Komponenten (Ug,Ig) zur Trenderkennung. Da die Zeitkonstante (C,Rii) im Vergleich zur Frequenz des Wechselanteiles hoch ist, läßt sich beispielsweise aus dem Verhältnis von Wechselspannungsamplitude und Wechselstromamplitude der Widerstand des Ladekreises $Rvi = Uw/Iw$ und die innere Spannung

$Ui = Ug-Ig*Rvi$ berechnen.

Zur Berechnung der Kenngröße (S) lassen sich die Gleich- und Wechselanteile von Ladestrom I und Akkuspannung (Ua) durch geeignete Schaltungen, wie beispielsweise Filter oder pulssynchrone Abtastung, oder digitale Rechenwerke ableiten.

Eine Vereinfachung der technischen Realisierung kann man erreichen, wenn der pulsierende Gleichstrom durch Gleichrichtung aus der Netzwechselspannung vorgegeben wird und im Stromminimum Null ist. Die zu diesem Zeitpunkt gemessene Spannung ist dann, wegen der fehlenden Spannungsabfälle im Ladekreis RI gleich Ui.

Fig.3a) zeigt eine Realisierungsvariante. Der Ladestrom kann auf einfache Weise mittels Vorwiderstand Rv aus der Netzwechselspannung gewonnen werden. Aus der Welligkeit der Akkuspannung kann mit einem Spitzenwert-Detektor (zB. Analogschaltung, synchrone Abtastung, digitale Musteranalyse) das Minimum der Einzelimpulse (Umin) herausgefiltert und der Abschalterkennungslogik zur Berechnung von S zugeführt werden.

Die Gasung bei Überladung wird verhindert, wenn die innere Akkuspannung unter einem vorgegebenen Wert bleibt. Die bekannte Konstantspannungsladung ist dafür nicht besonders geeignet, weil der Spannungsabfall an diversen Innenwiderständen unberücksichtigt bleibt. Es wird Abhilfe dadurch geschaffen, daß die innere Akkuspannung (Ui) ermittelt und mit einem Sollwert verglichen wird, und davon abhängig der Strom nachgestellt wird, daß die innere Akkuspannung Ui auf den vorgegebenen Wert geregelt wird.

Als eine der möglichen Realisierungsvarianten speist eine steuerbare Stromquelle (zBsp. Schaltregler) den Akku. Die Akkuspannung (Ua) wird gemessen und mit dem bekannten Stromverlauf (fI) die innere Akkuspannung ermittelt. Bei Abweichung vom Sollwert wird der Strom nachgeregelt.

In vielen Fällen ist es wünschenswert, Akkus verschiedener Kapazität mit optimaler Laderate aufzuladen. Üblicherweise muß dazu die Kapazität bekannt sein, worauf der Ladestrom vom Benützer eingestellt wird. Eine automatische Anpassung des Ladestromes auf die Zellkapazität wird dann erreicht, wenn die Anstiegsgeschwindigkeit der inneren Akkuspannung (dUi/dt) durch Stromstellung geregelt wird. Die praktische Realisierung kann mit den bereits beschriebenen Schaltungsanordnungen erreicht werden, wobei beispielsweise die differenzierte Akkuspannung dUi/dt einem Vergleicher zugeführt wird, der den Strom so einstellt, daß dUi/dt dem erwünschten Sollwert entspricht.

Bei Konstantspannungsladung von Akkus in Serienschaltung muß üblicherweise die Ladespannung entsprechend der Zellenanzahl vorgegeben werden. Eine automatische Einstellung wäre vorteilhaft. Dieser Vorteil läßt sich dadurch realisieren, daß zuerst die Ruhespannung gemessen wird, und davon ausgehend die Ladespannung stufenweise oder kontinuierlich gesteigert wird, bis sich ein Mindeststrom einstellt.

Als eine mögliche Ausführungsvariante dieses Verfahrens vergleicht z.Bsp. ein Mikroprozessor den Stromfluß (I) aus einer Spannungsquelle mit einem vorgegebenen Wert. Ist der Strom kleiner als der Sollwert, dann wird am Spannungsregler eine höhere Spannung eingestellt. Wenn er Strom erreicht ist, wird der Vorgang beendet und die Spannung bleibt eingestellt.

Ladeschaltungen benötigen üblicherweise eine Vielzahl elektronischer Baugruppen, Einzelbauelemente und Regler welche abgeglichen werden müssen. Eine Vielzahl der in dieser Schrift vorgestellten Verfahren, Prinzipien und Schaltungsvarianten kann aus einigen wenigen Halbleiterbauelementen realisiert werden, welche sich in einem einzigen Gehäuse unterbringen lassen und so ein neues eigenständiges Bauelement der Leistungselektronik formen.

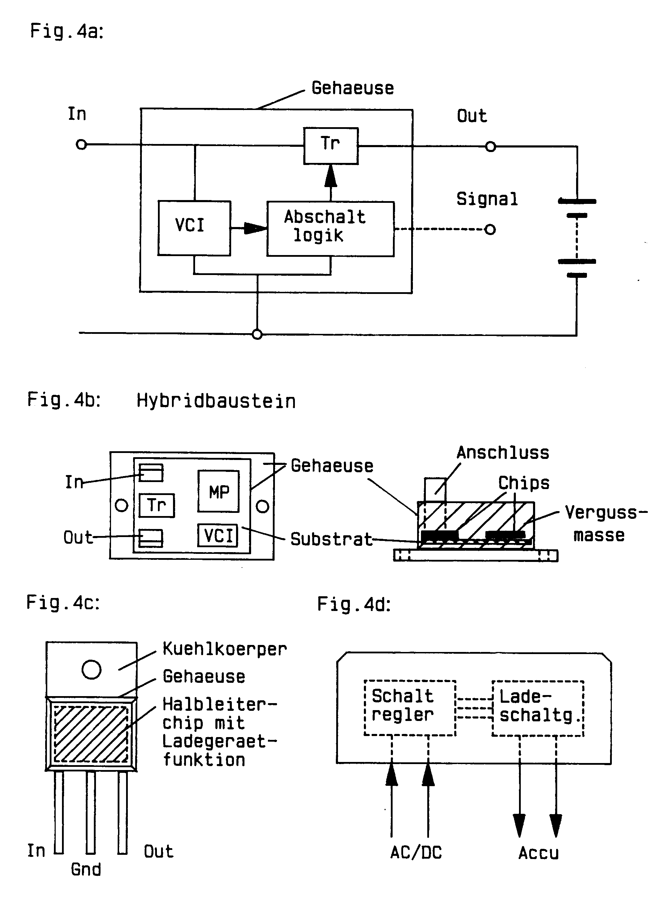

Fig.4a zeigt beispielhaft ein Blockschaltbild und Fig.4b eine Ausführungsform in Hybrid-Technologie.

Auf einem Substrat sind z.B. ein Single Chip Mikrocomputer (MP) als Meß-u. Steuerlogik, ein Leistungstransistor (Tr) als Ladestromsteller und eine interne Spannungsversorgung (VCI) untergebracht und funktionell verbunden. Die Stromanschlüsse des Leistungstransistors sind als Eingangsanschluß zur Energiezufuhr und als Ausgang zum Anschluß des Akkus nach außen geführt. Die Bezugsmasse kann im einfachsten Fall vom Gehäuse abgenommen werden oder auch über einen eigenen Anschluß zugeführt werden. Weitere Anschlüsse können ausgeführt werden, um zum Beispiel den Ladestatus zu signalisieren. Die gesamte Schaltung ist in einem Gehäuse untergebracht und formt so ein eigenständiges Bauelement.

Ein anderes Ausführungsbeispiel zeigt Fig.4c.

Die gesamte Schaltung ist auf einem Halbleiter-Chip integriert und in einem Standard-Gehäuse mit nur 3 Pins untergebracht. Auch hier können wieder mehrere Anschlüsse vorgesehen werden um zusätzliche Signale auszugeben.

Eine weitere Vereinfachung für den Anwender ergibt sich, wenn zusätzlich zur Ladesteuerschaltung auch der Gleichrichter und eventuell ein Schaltregler zu einer Baugruppe zusammengefaßt werden. Ein derartiges Bauelement kann mit 4 Anschlüssen ausgeführt werden und bringt wesentliche Vereinfachungen in der Herstellung von Akkuladegeräten.(Fig.4d).

Regenerieren

Das Regenerieren von Akkus erfordert ein mehrmaliges Entladen und Wiederaufladen. Dieser Vorgang kann automatisiert werden, indem eine Ablaufsteuerung MP wechselweise ein Ladegerät oder eine Ladeschaltung aktiviert und den Akku auflädt und dann durch eine Entladeschaltung wie z.B.

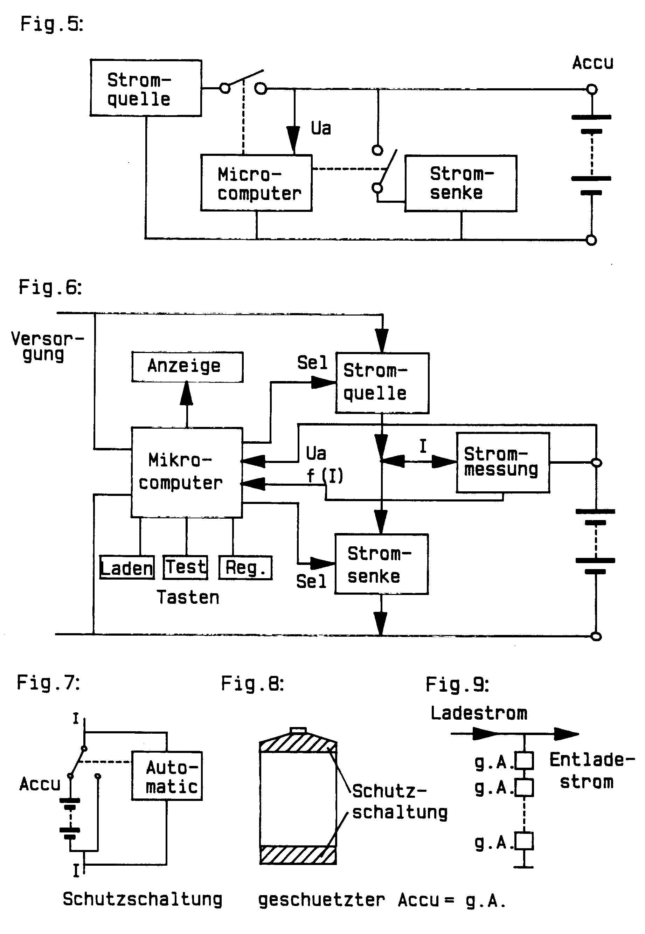

eine Stromsenke entlädt bis eine vordefinierte Entladespannung erreicht wird. Dieser Vorgang kann so oft wiederholt werden, die Entladekapazität zunimmt. Die Zunahme der Entladekapazität läßt sich feststellen, indem z.B. der Entladestrom über die Zeit oder die Entladezeit bei vorgegebenem Entladestrom gemessen wird. Eine Ausführungsvariante dazu ist Teil von Fig.5.

Akkuladegeräte sollen vielseitig und universell anwendbar sein. Durch die gemeinsame Anordnung einer Lade- und Entladeschaltung können Akkus auf ihre Funktion und Kapazität geprüft und nötigenfalls regeneriert werden. Die Anzeige der zu ladenden bzw. entnehmbaren Strommenge stellt für den Anwender ein wichtiges Hilfsmittel dar.

Die automatische Anpassung von Ladestrom und Ladespannung erlaubt es auch dem Laien durch die Funktionswahl über Tastatur beliebige Akkus optimal zu laden, zu testen oder zu regenerieren.

Fig.6 zeigt eine mögliche Ausführungsvariante.

Ein Mikroprozessor ist so programmiert, daß auf Tastendruck die Ladeschaltung bzw. Entladeschaltung, welche gemeinsam auf die Akkuanschlußklemmen (Stecker o.dgl.) wirken, entsprechend dem gewählten Funktionsablauf aktiviert werden. Über eine Strommeßschaltung wird der Strom laufend erfaßt, im MP berechnet (z.Bsp. Lademenge) und auf einer Anzeige dargestellt.

Produktions-und alterungsbedingt weisen Akkus unterschiedliche Kapazitäten auf. In Serienschaltung wird die speicherbare Strommenge durch die Kapazität des schlechtesten begrenzt. Bei ungleichen Kapazitäten kommt es bei vollständiger Entladung zur Umpolung und irreversiblen Beschädigung des Schwächsten. Ein einzelnes Abschalten unterbricht den Stromfluß der ganzen Serienschaltung wodurch auch die andere Akkukapazität verloren geht.

Dazu wird vorgeschlagen, nicht einen Abschalter, sondern einen Umschalter vorzusehen, der den Akku bei vollständiger Aufladung oder Entladung aus der Serienschaltung nimmt und auf eine Überbrückungsleitung umschaltet, sodaß der Stromkreis der Serienschaltung geschlossen bleibt (Fig.7). Der Umschalter wird, von einer Schaltlogik betätigt, die abhängig vom Ladezustand des Akkus arbeitet.

Einfachste Anwendung und höchste Zuverlässigkeit von Akkumulatoren wird erreicht, wenn die o.a. Schaltung jeden Akkumulator schützt und kein zusätzliches Bauelement darstellt. Auf Grund der Baugröße von Akkus besteht die Möglichkeit, die Ladeschutzschaltungen beim Akku ein- bzw. anzubauen (Fig.8).

**Patentansprüche**

1. Verfahren zum Laden, insbesondere zum Schnelladen, von Akkumulator-Batterien in Einzel- oder Serienschaltung, mit einem sich während des Ladevorgangs ändernden Ladestrom (I), wobei Ladestrom (I) und Akkuspannung (Ua) automatisch gemessen werden oder eines der beiden auf vorbekannte Werte eingestellt und nur die andere Größe gemessen wird, aus dem zeitlichen Verlauf von Ladestrom (I) und Akkuspannung (Ua) eine Kenngröße (S) abgeleitet wird, deren Änderungsgeschwindigkeit (dS/dt) einer Vergleichsoperation zugeführt wird und eine Abschaltung oder Reduktion der zugeführten Energie zur Verhinderung einer Überladung dann vorgenommen wird, wenn, als Kriterium für den vollgeladenen Zustand des Akkus, diese Änderungsgeschwindigkeit im Bereich eines Extremums der Kenngröße (S) kleiner als ein vorgegebener Mindestwert wird, dadurch gekennzeichnet, daß aus den Strom-Spannungsänderungen über das Akkuersatzschaltbild eine dem inneren Widerstand (Rii) oder der inneren Akkuspannung (Ui) entsprechende Größe als Kenngröße (S) berechnet und ihr zeitlicher Verlauf erfaßt wird, und daß automatisch die Änderungsgeschwindigkeit dieser Größe (dS/dt) in ein meß- und regeltechnisch auswertbares Signal umgeformt wird, das der Vergleichsoperation zum Erkennen des Volladezustandes zugeführt wird.

2. Verfahren nach Anspruch 1, dadurch gekennzeichnet, daß dem Akku die Energie pulsierend zugeführt wird, wobei die Pulsationen zur Berechnung des Innenwiderstandes (Rvi) des Akkus und der Zuleitungen ausgefiltert werden und daraus die Kenngröße (S) und ihr zeitlicher Verlauf berechnet werden.

3. Verfahren nach Anspruch 2, dadurch gekennzeichnet, daß der pulsierende Gleichstrom durch Gleichrichtung aus der Netzwechselspannung erzeugt wird, daß der Verlauf der Akkuspannung (Ua) im Stromminimum gemessen wird und daraus die Kenngröße (S) berechnet wird.

4. Verfahren nach Anspruch 1 oder 2 oder 3, dadurch gekennzeichnet, daß durch Änderung des Ladestromes (I) die Akkuspannung (Ua), vorzugsweise die innere Akkuspannung (Ui), auf einen vorgegebenen Sollwert geregelt wird und aus dem Verlauf des Ladestromes (I) die Kenngröße (S) berechnet wird.

**5.** Verfahren nach Anspruch 1 oder 2, dadurch gekennzeichnet, daß eine Regelvorrichtung die Anstiegsgeschwindigkeit der Akkuspannung (Ua) oder der inneren Akkuspannung (Ui) durch Einstellung des Ladestromes auf einen von einer Führungsgröße vorgegebenen Wert regelt.

**6.** Verfahren nach Anspruch 1 oder 2 oder 3, dadurch gekennzeichnet , daß eine Steuerschaltung automatisch die Spannung einer Spannungsquelle solange erhöht bis sich ein Mindeststrom einstellt.

**7.** Verfahren nach einem der Ansprüche 1-6, dadurch gekennzeichnet, daß eine Ablaufsteuerung automatisch wiederholtes Aufladen und Entladen des Akkus zum Regenerieren der Akkukapazität durchführt und daß dieser Vorgang vorzugsweise so lange wiederholt wird als die Akkukapazität zunimmt.

**8.** Verfahren nach Anspruch 1 oder 2 oder 3, dadurch gekennzeichnet, daß Akkus in Serienschaltung geladen werden, daß eine Schaltlogik zum Schutz vor Überladung oder vollständiger Entladung oder verkehrter Polung abhängig vom Ladezustand des Akkus einen Umschalter betätigt, der den Akku bei vollständiger Aufladung oder Entladung aus der Serienschaltung nimmt, indem er auf eine Überbrükkungsleitung schaltet.

**9.** Schaltungsanordnung zur Durchführung des Verfahrens nach einem der Ansprüche 1-8, mit Schaltmitteln zur Abgabe eines sich während des Ladevorgangs ändernden Ladestroms (I), mit einer Schaltung zum automatischen Messen des Ladestroms (I) und der Akkuspannung (Ua) oder zur Einstellung einer der beiden Größen auf vorbekannte Werte und zur Messung der anderen Größe, mit einem Schaltmittel zum Abschalten oder Reduzieren der zugeführten Energie zur Verhinderung einer Überladung und mit einer Abschaltlogik, die aus dem zeitlichen verlauf von Ladestrom und Akkuspannung eine Kenngröße (S) bildet und deren Änderungsgeschwindigkeit (dS/dt) einer Vergleichsoperation zuführt, die in weiterer Folge die Abschaltung oder Reduktion der Energiezufuhr bewirkt, wenn, als Kriterium für den vollgeladenen Zustand des Akkus, diese Änderungsgeschwindigkeit im Bereich eines Extremums der Kenngröße (S) kleiner als ein vorgebener Mindestwert wird, dadurch gekennzeichnet, daß in der Abschaltlogik mit einer Rechenschaltung aus Strom-Spannungsänderungen über das Akkuersatzschaltbild eine dem innenren Widerstand (Rii) oder der inneren Akkuspannung (Ui) entsprechende Kenngröße (S) errechnet wird und die Änderungsgeschwindigkeit (dS/dt) dieser Kenngröße als Meß-und regeltechnisch auswertbares Signal der Vergleichsoperation zum Erkennen des Volladezustandes zugeführt wird.

**10.** Schaltungsanordnung nach Anspruch 9, dadurch gekennzeichnet, daß ein Mikroprozessor die Aufgaben der Abschaltlogik ausführt.

**11.** Schaltungsanordnung nach Anspruch 9 oder 10, dadurch gekennzeichnet, daß die gesamte Schaltungsanordnung ein eigenständiges Bauelement formt.

**12.** Batterieladegerät mit Schaltungsanordnung nach Anspruch 9, dadurch gekennzeichnet, daß über eine Befehlseingabeeinheit, wie z.B. eine Tastatur, kontrolliertes Laden und Entladen von Akkus eingeschaltet wird und die zugeführte bzw. entnommene Strommenge oder Energiemenge gemessen und auf einer Anzeige dargestellt wird und daß eine automatische Ablaufsteuerung zum Regenerieren des Akkus nach dem Verfahren nach Anspruch 7 vorgesehen ist, wobei der Ladestrom und/oder die Akkuspannung automatisch an den jeweiligen Akku angepaßt wird/werden.

**13.** Schaltungsanordnung nach Anspruch 9 zur Ladung von Akkkus in Serienschaltung, dadurch gekennzeichnet, daß eine Schaltlogik abhängig vom Ladezustand einen Umschalter betätigt, der einen Akku bei vollständiger Auf- oder Entladung oder verkehrter Polung aus der Serienscahltung nimmt, indem der Unschalter den Strom auf eine Überbrückungsleitung schaltet.

**14.** Schaltungsanordnung nach Anspruch 13, dadurch gekennzeichnet, daß die Anordnung in einem Akku oder Akkupaket eingebaut oder mit diesem verbunden ist.

**15.** Schaltungsanordnung nach Anspruch 13, dadurch gekennzeichnet, daß Einzelzellen oder Gruppen von Einzelzellen durch den Umschalter aus der Serienschaltung genommen werden.

**Claims**

**1.** Method for charging, especially for quick charging of accumulator-batteries in single-or serial connection, with a charging current(I)-changing during the charging process-, whereby the charging current (I) and accumulator voltage (Ua) are measured automatically, or one of both is adjusted to already known values and only the other value is measured, and from the temporal course of the charging current (I) and the charging voltage (Ua) a parameter (S) is derived, of which the gradient (dS/dt) is supplied to a comparison operation and the supplied energy is switched off or reduced to avoid overcharging, when, as a criterion for the full charge state of the accumulator, within the range of an extremum of the parameter (S) this gradient becomes smaller than a given minimal value characterized thereby ;
that from the current-voltage changes a parameter (S) can be calculated over the accumulator equivalent circuit diagram, according to the inner resistance (Rii) or the inner accumulator voltage (Ui), and that its temporal course is recorded, and that the gradient of this parameter (dS/dt) is automatically transformed into a signal for measurement and control processes, which is fed to a reference operation for recognition of the full charge state.

2. Method according to claim 1, characterized thereby that the energy is supplied to the accumulator in a pulsatory way, whereby the pulsations are filtered out, for the calculation of the internal resistance of the accumulator (Rvi) and the leads, and the parameter (S) and its temporal course is calculated out of it.

3. Method according to claim 2, characterized thereby, that the pulsating direct-current is generated by rectification of the alternating line current, that the course of accumulator voltage (Ua) is measured in the current minimum and that the parameter (S) is calculated out of it.

4. Method according to claim 1 or 2 or 3, characterized thereby, that by adjustment of the charging current (I), the accumulator voltage (Ua), especially the inner accumulator voltage (Ui) is regulated to a given reference value and the parameter (S) is calculated out of the course of the charging current (I) .

5. Method according to claim 1 or 2, characterized thereby, that a control unit is setting the gradient (dU/dt) of accumulator voltage (Ua) or of the inner accumulator voltage (Ui) to the given value of a reference input, by adjustment of the charging current.

6. Method according to claim 1 or 2 or 3, characterized thereby, that a control unit automatically increases the voltage of a voltage source until a minimum current occurs.

7. Method according to claims 1 to 6, characterized thereby, that a control unit automatically carries out repetitive charging and discharging of the accumulator for regenerating the accumulator capacity, and that this process prefereably is repeated as often as accumulator capacity increases.

8. Method according to claim 1 or 2 or 3, characterized thereby, that accumulators are charged in serial connection, that a switching logic for the prevention ainst overcharging or total discharging or reversed polarity operates a change-over switch dependent upon the charging state of the accumulator, which takes the accumulator out of the serial connection at full charge or discharge, by switching to a by-pass line.

9. Circuit configuration to perform the methods according to one of the claims 1-8, with means for the supply of a charging current (I), changing during charging process, with means for the automatic measurement of charging current (I) and accumulator voltage (Ua) or for adjustment of one of both parameters to a given value and for measurement of the other parameter, with means for switching off or reducing the energy supply to avoid overcharging and with a switch-off-logic, which derives a parameter (S) out of the time course of the charging current and the accumulator voltage and which feeds the gradient (dS/dt) of it to a reference operation, which subsequently causes switch-off or reduction of energy supply, when - as a criterion for the fully-charged state of the accumulator - in the range of an extremum of parameter (S) this gradient (dS/dt) becomes smaller than a given minimum value, characterized thereby, that in the switch-off-logic a parameter (S) according to the inner resistance (Rii) or the inner accumulator voltage (Ui) is calculated out of the current-voltage-changes by means of a calculating-circuit and that the gradient (dS/dt) of this parameter is converted into a signal which is supplied to the comparison operation for the recognition of the full charge state.

10. Circuit configuration according to claim 9, characterized thereby, that a microprocessor carries out the duties of the said switch-off-logic.

11. Circuit configuration according to claim 9 or 10, characterized thereby, that the complete circuit configuration forms a single element.

12. Battery-charger with a circuit configuration according to claim 9, characterized thereby, that via a command input unit controlled charging and discharging of accumulators is activated and that the amount of current or energy fed into or drawn out of the accumulator is measured and displayed and that an automatic control unit for regenerating the accumulator is provided, according to the method in claim 7, whereby the charging current and/or accumulator voltage is/are adjusted automatically to the specific accumulator.

13. Circuit configuration according to claim 9 for charging of accumulators in serial connection, characterized thereby, that a logic circuit operates a change over switch dependent upon the charge, which takes out an accumulator with total charge or discharge or inverted polarity from the serial connection, by switching the current to a by pass-line.

14. Circuit configuration according to claim 13, characterized thereby, that the said configuration is built into an accumulator or accumultor pack or connected to it.

15. Circuit configuration according to claim 13, characterized thereby, that single cells of groups of single cells can be taken out of serial connection by means of the said change over switch.

**Revendications**

1. Procédé de chargement, en particulier de chargement rapide de batteries d'accumulateurs montées individuellement ou en série, avec un courtant de chargement (I) variant au cours du processus de chargement, au cours duquel le courant de chargement et la tension des accumulateurs (Ua) sont mesurés automatiquement, ou bien l'une des deux grandeurs est réglée sur des valeurs préétablies et l'autre, seule, mesurée, procédé lors duquel une grandeur de régime (S) est déduite de la variation au cours du temps du courant de chargement (I) et de la tension des accumulateurs (Ua), grandeur dont la vitesse de variation (dS/dL) subit une opération de comparaison et un débranchement au une réduction de l'énergie fournie afin d'éviler une surcharge, si cette vitesse de variation, prise comme critère pour l'état de chargement maximal de l'accumulateur, devient inférieure à une valeur minimale préétablie, dans le domaine d'un extrême de la grandeur de régime (S), caractérisée par le fait qu'une grandeur correspondant à la résistance interne (Rii) ou à la tension interne de l'accumulateur (Ui), provenant des variations électrique sur le schéma de montage est évaluée en tant que grandeur de régime (S) et qu'on enregistre son évolution au cours du temps, et par le fait que la vitesse de variation de cette grandeur (dS/dL) est transformée automatiquement en un signal de mesure interprétable techniquement, qui alimente l'opération de comparaison visant à reconnaître l'état de chargement maximal.

2. Procédé d'aprés la revendication 1, caractérisé par le fait que l'énergie est fournie à l'accumulateur par pulsations, au cours du quel les pulsations permettant d'évaluer la résistance interne (Rui) de l'accumulateur et des circuits électriques sont filtrées, ce qui permet de calculer le grandeur de régime (S) et sa variation au cours du temps.

3. Procédé d'aprés les revendications 1 ou 2, caractérisé par le fait que le courant continu pulsé est produit par le redressement de la tension alternative du réseau, par le fait que l'évolution de la tension des accumulateurs (Ua) est mesurée en courant minimal et que la grandeur de régime (S) en est déduite.

4. Procédé d'aprés les revendications 1, 2 ou 3, caractérisé par le fait que grâce à la variation du courant de chargement (I), la tension de l'accumulateur (Ua), et de préférence la tension interne de l'accumulateur (Ui) est réglée sur une valeur-seuil préétablie et par le fait que la valeur de régime (S) est calculée à partir de la variation du courant de chargement (I).

5. Procède d'aprés les revendications 1 ou 2, caractérisé par le fait qu'un dispositif de réglage régule la vitesse d'augmentation de la tension de l'accumulateur (Ua) ou de la tension interne (Ui) en ajustant le courant électrique sur une valeur de la grandeur de référence préétablie.

6. Procédé d'après les revendications 1,2 ou 3, caractérisé par le fait qu'un branchement électrique augmente automatiquement la tension d'une source de tension jusqu'à ce qu'un courant minimum apparaisse.

7. Procédé d'après une des revenducations 1 - 6, caractérisé par le fait qu'une commande charge et décharge automatiquement l'accumulateur à maintes reprises pour permettre la régénération de la capacité de l'accumulateur, et par le fait que ce processus est de préférence répété aussi longtemps que la capacité de l'accumulateur augmente.

8. Procédé d'après les revendications 1,2, ou 3, caractérisé par le fait que les accumulateurs sont montés en série et qu'une logique de branchement actionne un commutateur afin d'éviter une surcharge, une décharge total ou une inversion de polarité dépendante de l'état de chargement de l'accumulateur, commutateur qui enlève l'accumulateur du montage en série dans le ces d'un chargement maximal ou d'une décharge en connectant un circuit auxiliaire.

9. Dispositif de montage pour la mise en oeuvre du procédé d'après une revendications 1 - 8, comportant des appareils de montage délivrant un courant de chargement (I) variant au cours du processus de chargement, un montage mesurant automatiquement le courant de chargemement (I) et la tension des accumulateurs (Ua) ou bien permettant de régler l'une des deux grandeurs sur une valeur prédéterminée et de mesurer l'autre grandeur, avec un appareil de montage permettant le débranchement ou la réduction de l'énergie fournie afin d'éviter une surcharge, et comportant une logique de débranchement qui construit une grandeur de régime (S) à partir de la variation au cours du temps du courant électrique et de la tension des accumulateurs et dont la vitesse de variation (dS/dt) alimente une opération de comparaison, qui provoque par suite le débranchement ou la réduction de l'énergie fournie si cette vitesse de variation, prise comme critére pour l'état de chargement maximal de l'accumulateur, devient inférieure à une valeur minimale préétablie dans le domaine d'un extrème de la grandeur de régime (S) correspondant à la résistance interne (Rii) ou à la tension de l'accumulateur (Ui) est déterminante, conformément à la logique de branchement, avec un montage permettant de calculer les variations de tension électrique apparaissant sur le circuit électrique équivalent, et lors duquel la vitesse de variation (dS/dt) de cette valeur de régime est utilisée comme signal de mesure de l'opération de comparaison interprétable techniquement, afin de reconnaitre l'état de chargement maximal.

10. Dispositif de montage d'après la revendication 9, caractérisé par le fait qu'un microprocesseur accomplit la logique de débranchement.

11. Dispositif d'après les revendications 9 ou 10, caractérisé par le fait que l'ensemble de dispositif de montage forme un élément constitutif indépendant.

12. Chargeur de batteries au dispositif de montage exposé à la revendication 9, caractérisé par le fait qu'un chargement et un déchargement controlés des accumulateurs sont mis en marche sur une unité de commande programmée comme par ex un clavier, et que la quantité de courant ou d'énergie apportée ou retirée est mesurée et représentée sur un schéma, et par le fait qu'une commande automatique est prévue pour la régénération de l'accumulateur d'après le procédé exposé à la revendication 7, au cours de laquelle le courant électrique et/ou la tension des accumulateurs est/sont adapté(e)(s) automatiquement à chaque accumulateur.

13. Dispositif de montage d'aprés la revendication 9 pour le chargement d'accumulateurs montés en série, caractérisé par le fait qu'un logique de branchement dépendante de l'état de chargement commande un commutateur qui soustrait un accumulateur du montage en série lors d'un chargement ou d'un déchargement maximal ou d'une inversion de polarité, en connectant le courant sur un circuit auxiliaire.

14. Dispositif de montage d'après la revendication 13, caractérisé le fait que le dispositif est incorporé à un accumulateur ou un ensemble d'accumulateurs ou relié à celui/ceux-ci.

15. Dispositif de montage d'aprés la revendication 13, caractérisé par le fait que des cellules simples ou des groupes de cellules simples sont soustraites au montage en série par le commutateur.

Fig.1a:
Ersatzschaltbild

Anode

Akku

Rvi

Ua.

Ui

Rii

C

Ua.

Kathode

Fig.1b:

I → Ladestrom Schalter → Strom Messung

f (I)

Ladestrom Schalter

Soll wert — ds/dt — ds/dt — s — Rechen Schaltung — f (U) — Spannungs Messung

Fig.1c:

I → Ladestrom Schalter — Rm

aus

Um    Ua

Mikroprozessor mit ADC

Fig.2a:

Fig.2b:

Fig.2c:

Fig.3a:

Fig.4a:

Gehaeuse

In

Out

Tr

Signal

VCI → Abschalt logik

Fig.4b:    Hybridbaustein

In
Tr
Out
MP
VCI

Gehaeuse

Substrat

Anschluss

Chips

Verguss-masse

Fig.4c:

Kuehlkoerper

Gehaeuse

Halbleiter-chip mit Ladegeraet-funktion

In    Out
Gnd

Fig.4d:

Schalt regler

Lade-schaltg.

AC/DC    Accu

**Fig.5:**

**Fig.6:**

**Fig.7:**

Schutzschaltung

**Fig.8:**

geschuetzter Accu = g.A.

**Fig.9:**